# EUROPEAN PATENT APPLICATION

(11) **EP 2 083 314 A1**
(43) Date of publication of application: **29.07.2009**
(21) Application number: 08100873.2
(22) Date of filing: 24.01.2008
(51) Int. Cl.: G02F 1/1333, G02F 1/139

(54) **Liquid crystal display device**

(71) Applicant: TPO Displays Corp., Miao-Li County (TW)
(72) Inventor: Dessaud, Nathalie Magali Danielle, 5643 HJ Eindhoven (NL)
(74) Representative: Ketelaars, Maarten F.J.M.

(57) **Abstract**

A liquid crystal display device including a liquid crystal layer, a common electrode, and an electrode set is provided. The liquid crystal layer is placed between said common electrode and the electrode set, and the electrode set is provided for switching the liquid crystal layer. The electrode set includes a first electrode and a second electrode. The first electrode switches a first area of the liquid crystal layer. The second electrode switches a second area of the liquid crystal layer. Particularly, the second area includes at least a part of the area of the liquid crystal layer that the first area does not include.

## Description

### Field of Invention

The present invention relates to a liquid crystal display, particular to a vertical aligned (VA) liquid crystal display device.

### Background of the Invention

A liquid crystal display (LCD) is one of the most widely used flat panel displays. An LCD includes two panels provided with field-generating electrodes such as pixel electrodes and a common electrode and a liquid crystal (LC) layer sandwiched therebetween. The LCD displays images by applying voltages to the field-generating electrodes to generate an electric field in the LC layer, which determines orientations of LC molecules in the LC layer to adjust polarization of incident light.

Among the LCDs, a vertical alignment (VA) mode LCD, which aligns LC molecules such that the long axes of the LC molecules are perpendicular to the panels in absence of electric field, is spotlighted because of its high contrast ratio and wide viewing angle.

The switching time of VA mode LCD is limited by the material and cell configuration. But it is also limited by what is referred to as the reverse flow effect (or backflow effect). This phenomenon occurs if a too high voltage is applied to a VA cell and inversely results in a longer switching time. This phenomenon has been described in the following references: [1] De Gennes and Prost, Physics of Liquid Crystals 2nd Ed, Oxford; Clarendon Press, (1995); [2] Chandrasekar S., Liquid Crystals, 2nd edition, Cambridge University Press, (1992); [3] Roosendaal, Dessaud, Hector, Hughes, Boer, IDRC conference proceeding, 10-3, 127-130 2006; [4] Dessaud, Roosendaal, Hector, Hughes, Boer, IDW'06 Digest, LCT7-2, 651-654, 2006; [5] Sang Soo Kim, Brian H. Berkeley, Kyeong-Hyeon Kim, and Jang Kun Song, J. Soc. Inf. Display 12, 353 (2004).

It is known that a more uniform switching could be obtained by increasing the number of domains in a display. However, the approaches in the prior art would unfavorably reduce the total aperture as, because of the shape of the electrode, some areas of LC will never switch and this will reduce the total aperture. Furthermore, the problem become even bigger as the pixel size gets smaller.

Therefore, it is desirable to have a LCD which can compromise between a fast uniform switching and a reduced aperture display. It is even more advantageous if the backflow effect in the LCD is eliminated without affecting much other properties.

### Summary of the Invention

One aspect of the present invention is to provide an LCD that can have a fast switching of LC.

Another aspect of the present invention is to provide an LCD in which the backflow effect is eliminated.

Still another aspect of the present invention is to provide an LCD that can have a fast switching of LC without reducing the total aperture.

In one embodiment, disclosed is a liquid crystal display device including a liquid crystal layer, a common electrode, and an electrode set. The liquid crystal layer is placed between said common electrode and the electrode set, and the electrode set is provided for switching the liquid crystal layer. The electrode set includes a first electrode and a second electrode. The first electrode switches a first area of the liquid crystal layer, and has at least two parts extending in different horizontal directions. The second electrode switches a second area of the liquid crystal layer. Particularly, the second area includes at least a part of the area of the liquid crystal layer that the first area does not include.

In another embodiment, disclosed is a liquid crystal display device including a liquid crystal layer, a common electrode, and an electrode set. The liquid crystal layer is placed between said common electrode and the electrode set, and the electrode set is provided for switching the liquid crystal layer. The electrode set includes a first electrode and a second electrode. The first electrode switches a first area of the liquid crystal layer. The second electrode switches a second area of the liquid crystal layer. Particularly, the first electrode and the second electrode are on the same plane, and the second area includes at least a part of the area of the liquid crystal layer that the first area does not include.

In still another embodiment, disclosed is a liquid crystal display device including a liquid crystal layer, a common electrode, and an electrode set. The liquid crystal layer is placed between the common electrode and the electrode set, and the electrode set is provided for switching the liquid crystal layer. The electrode set includes a first electrode and a second electrode. The first electrode switches a first area of the liquid crystal layer. The second electrode switches a second area of the liquid crystal layer. Particularly, the first electrode and the second electrode are driven with different time sequences, and the second area includes at least a part of the area of the liquid crystal layer that the first area does not include.

In yet another embodiment, disclosed is a liquid crystal display device including a liquid crystal layer, a common electrode, and an electrode set. The liquid crystal layer is placed between said common electrode and the electrode set, and the electrode set is provided for switching the liquid crystal layer. The electrode set includes a first electrode and a second electrode. The first electrode switches a first area of the liquid crystal layer. For example, the first electrode has a square shape. The second electrode switches a second area of the liquid crystal layer. Particularly, the second area includes at least a part of the area of the liquid crystal layer that the first area does not include, and that part of the area of the liquid crystal layer has at least two parts extending in different horizontal directions.

The foregoing and other features of the invention will be apparent from the following more particular description of embodiment of the invention.

### Brief Description of the Drawings

The present invention is illustrated by way of example and not intended to be limited by the figures of the accompanying drawing, in which like notations indicate similar elements.

FIG. 1 is a block diagram of the LCD device according to an embodiment of the present invention;

FIG. 2a exemplarily shows the profile of LCD pixel cell according to an embodiment;

FIG. 2b exemplarily shows the profile of components of LCD pixel cell according to an embodiment;

FIGs. 3a-3e illustrate the first electrode of the electrode set according to several embodiments of the present invention;

FIG. 4a respectively shows the LC layer, the first electrode, and the second electrode according to an embodiment of the present invention;

FIG. 4b respectively shows the LC layer, the first electrode, and the second electrode according to another embodiment of the present invention;

FIG. 4c shows the first electrode and the second electrode on the same plane according to an embodiment of the present invention; and

FIG. 4d further shows the profile of shows the LCD pixel cell according to the embodiment shown in FIG. 4c.

### Detailed Description

The present invention is useful for a vertical aligned (VA) LCD and will be described with reference to the accompanying drawings. However, those skilled in the art can understand that the present invention may, however, be embodied in many different forms and should not be construed as limited to the embodiments set forth herein.

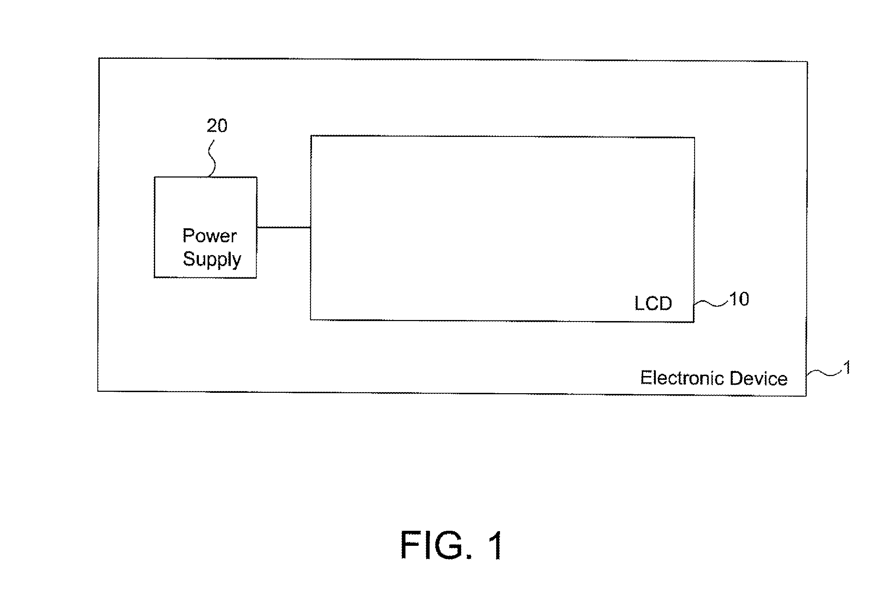

FIG. 1 is a diagram of an electronic device **1** with an LCD **10** according to an embodiment of the present invention. The electronic device **1** also has a power supply **20** connected to the LCD **10** to supply power to the LCD **10.** In this embodiment, the LCD **10** is a color or monochromic image display integrated into the electronic device **1.** As known to those skilled in the art, the electronic device **1** can be a mobile phone, a personal digital assistant (PDA), a notebook computer, a desktop computer, a television, a car media player, a portable video player, digital camera, global positioning system (GPS), avionics display, etc.

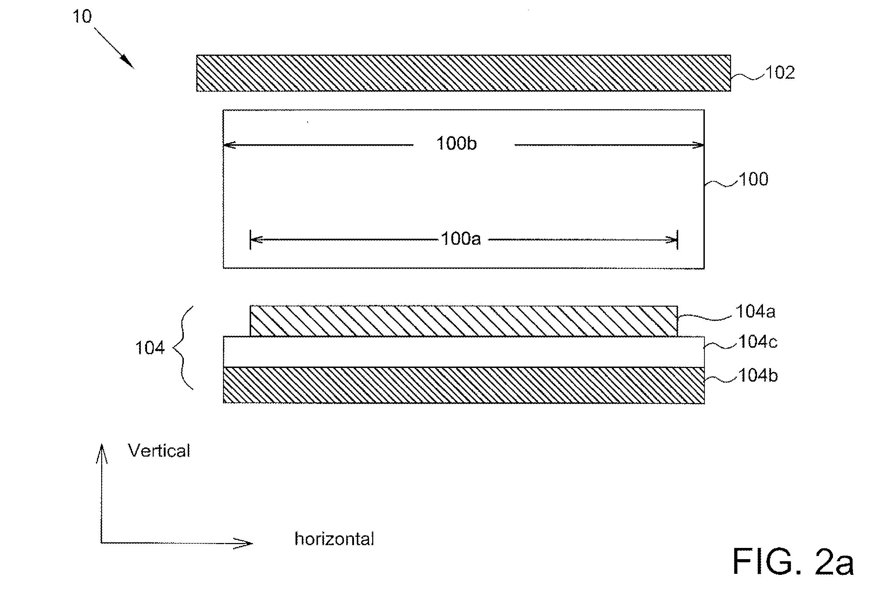

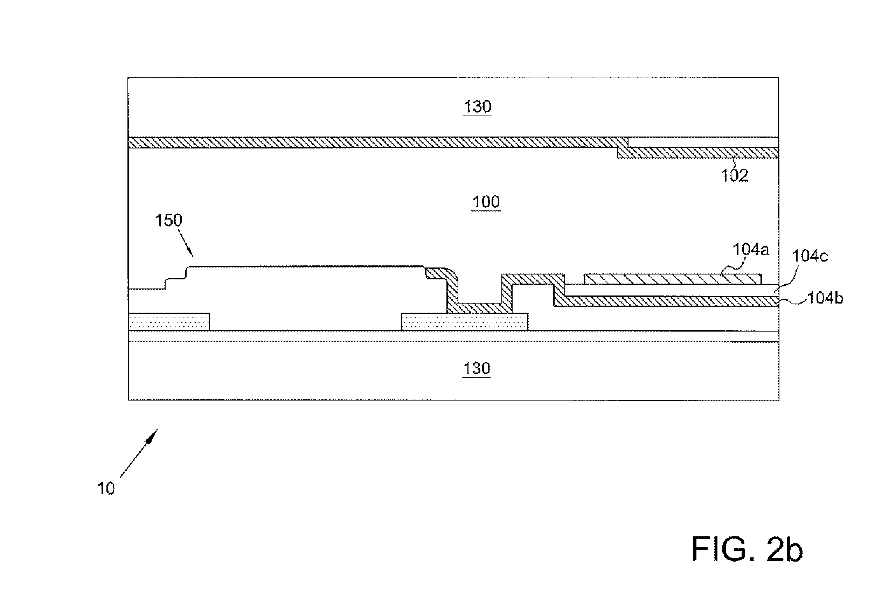

According to an embodiment of the present invention, FIG. 2a further illustrates the profile of LCD **10,** which includes a liquid crystal (LC) layer **100,** a common electrode **102,** and an electrode set **104.** LCD **10** may have many cells, but FIG. 2a illustrates only one cell of LCD 10 to explain the present invention. In this example, the pixel cell, corresponding to a sub pixel, can have a size of 40 µm x 40 µm and a thickness of 4.15 µm Note that the pixel cell can have other sizes like 20 µm x 20 µm, 30 µm x 30 µm, or 39.5 µm x 39.5 µm, and the thickness can be any suitable one greater than 1.5 µm. As shown, the LC layer **100,** where the LC molecules are vertical aligned (not shown in FIG. 2a), is sandwiched between the common electrode **102** and the pixel electrode set **104.** The electrode set **104,** placed on the TFT (not shown) side, is provided for switching the liquid crystal layer **100.** Note that the LCD **10** may include other components, such as substrates **130,** color filters **140,** TFT **150,** as shown in FIG. 2b.

The common electrode **102,** the LC layer **100,** and the pixel electrode set **104** form a liquid crystal capacitor, which stores applied voltages after turn-off of the TFT(s) (not shown). The pixel electrode set **104,** supplied with the data voltages, generates electric fields in cooperation with the common electrode **102,** which reorients liquid crystal molecules of the liquid crystal layer **100.** The common electrode **102,** which can be a conventional common electrode, can be made of ITO or IZO. The pixel electrode set **104,** like conventional pixel electrode but with a different structure, can be made of ITO or IZO. As shown in FIG. 2a, the electrode set **104** includes a first electrode **104a,** a second electrode **104b,** and a dielectric layer **104c** (e.g., a Si0ₓ or SiN layer with a thickness of, for example, 0.1 µm or 0.25 µm) placed therebetween. Those skilled in the art can understand that the electrode set which has more than two electrodes and more dielectric layers to separate the electrodes is still covered by the present invention.

The first electrode **104a** and the second electrode **104b** are independently driven. By this arrangement, the first electrode **104a** and the second electrode **104b** can be driven with different voltages or driven according to different time sequences (e.g., be turned on at different time) to achieve the desired switching effect. In one scenario, a voltage of 5 V is first applied to the first electrode **104a,** and after 5 milliseconds (ms), a voltage of 6 V is applied to the second electrode **104b.** In another scenario, a voltage of 4 V is first applied to the first electrode **104a,** and after 5 ms, a voltage of 6 V is applied to the second electrode **104b.** Or a same voltage of 5 V can be applied to both the first electrode **104a** and the second electrode **104b,** but the first electrode 104a is turned on 5 ms prior to the second electrode **104b.** Nevertheless, that using only one TFT and one storage capacitor to respectively drive the first electrode **104a** and the second electrode **104b** is also covered by the present invention.

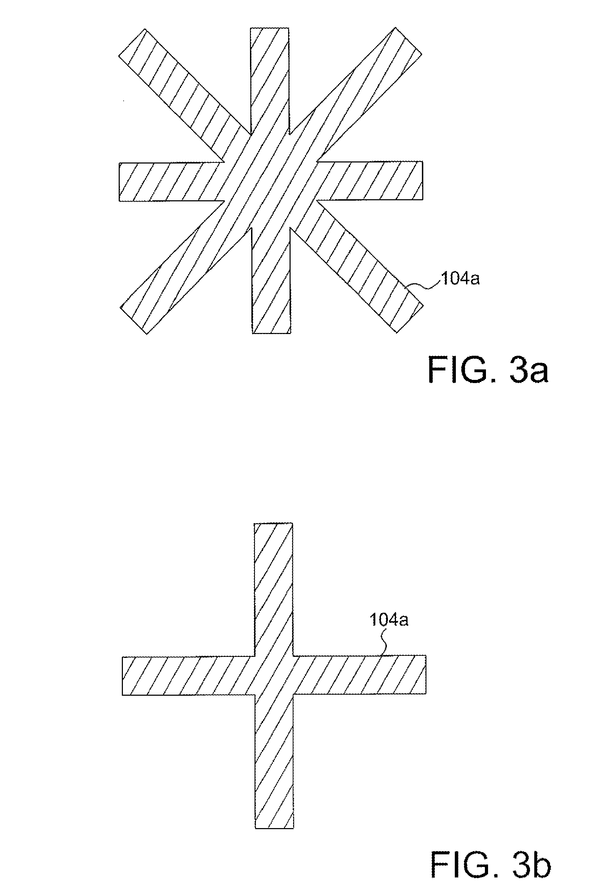

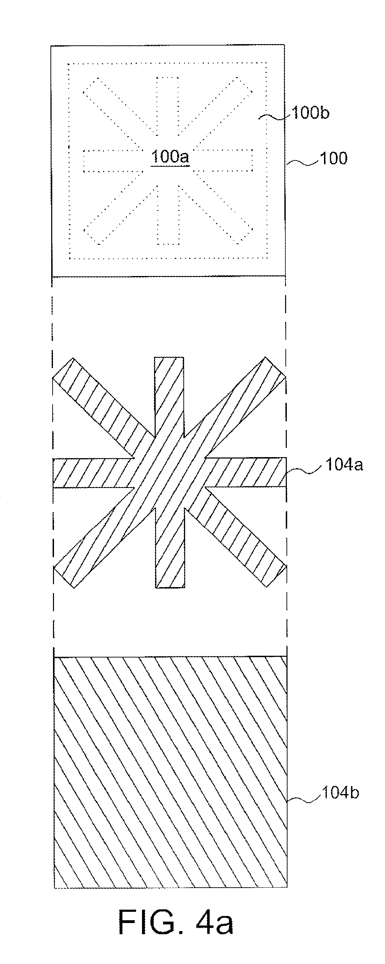

Compared with the conventional design for pixel electrode (e.g., as a single square electrode to cover the whole area of the LC layer), the first electrode **104a** may have a particular shape for switching the LC layer **100** (as later shown in FIGs. 3a-3d). In an embodiment, the first electrode **104a** has a fringing structure (not shown in FIG. 2a) and generates a fringing field for switches a first area **100a** instead of the whole area of LC layer **100.** The switched area of LC layer **100a** is related to the size and the shape of the first electrode **104a.** For example, a small-size first electrode **104a** can only effectively switch the LC molecules of LC layer **100** in a small area **100a,** and the shape of the switched area **100a** more or less looks like the first electrode **104a** (as later shown in FIGs. 4a-4b).

Regarding the shape of the first electrode **104a,** the present invention does not like to specify any specific ones, but it has at least two parts extending in different horizontal directions and thus has non-parallel edges, to have the multiple and diverse domains switching effect. For example, as shown in FIG. 3a, the first electrode **104a** has a star shape having 8 parts extending in different horizontal directions. Moreover, when incorporated into the LCD **10** of FIG. 2a, the first electrode **104a** can be placed within a square of 35 µm x 35 µm, which is the size of the second electrode **104b** in one embodiment.

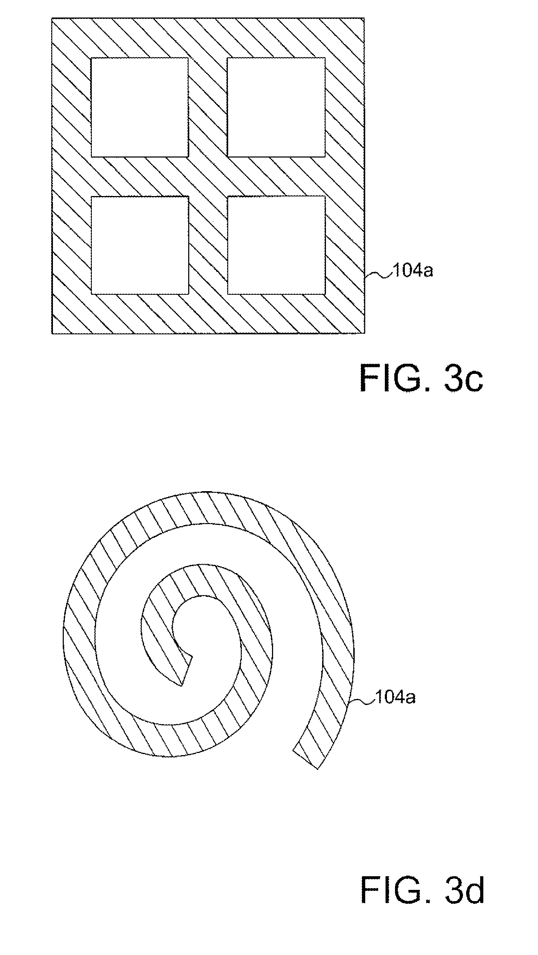

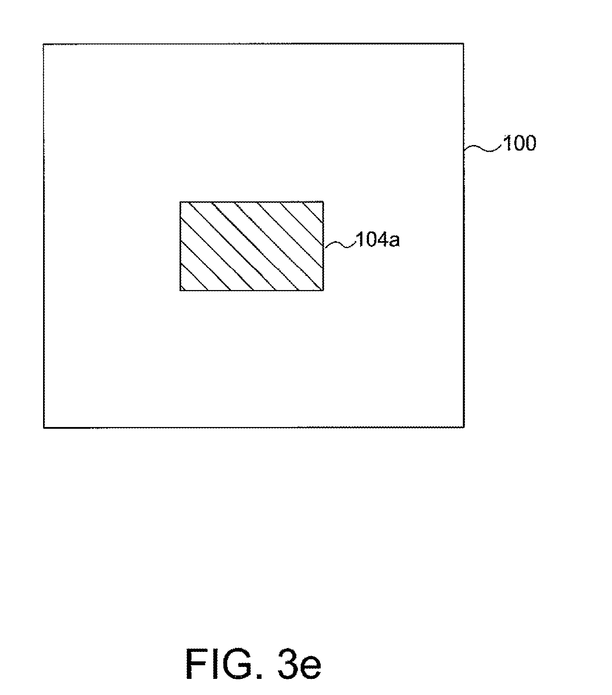

In addition to the star shape, the first electrode **104a** can have a cross shape (shown in FIG. 3b), a grid shape (shown in FIG. 3c), a spiral shape (shown in FIG. 3d), etc. Meanwhile, in order to gain some uniformity for the switching, the first electrode **104a** can have a symmetrical shape as the examples shown in FIGs. 3a-3c. In another embodiment, as shown in FIG. 3e, the first electrode **104a** can simply be a small square, relative to the whole area of LC layer **100.**

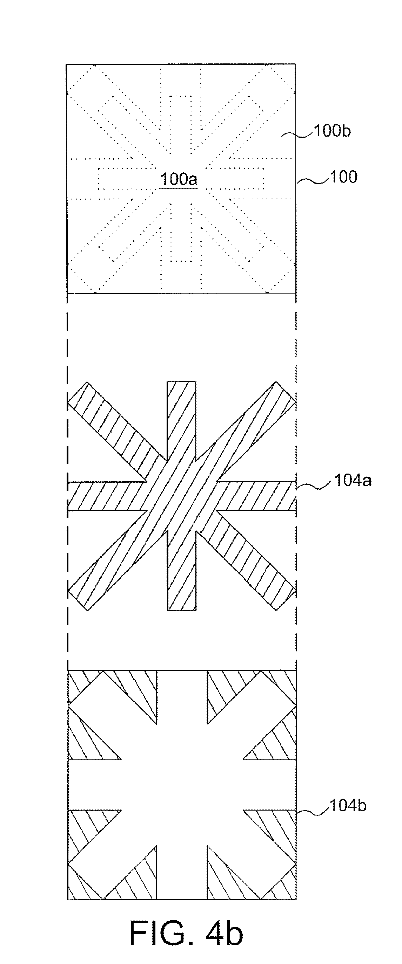

Those skilled in the art should understand the arrangement of the aforementioned first electrode **104a** can be directed to, but not limited to, the fast switching by reducing the backflow effect. And to effectively reduce the backflow effect, the first electrode **104a** has an increase number of edges. However, it is desired to maintain a high aperture of the LC cell at the same time, so the second electrode **104b** of the electrode set **104** is configured to switch a second area **100b** of the LC layer **100,** as shown in FIG. 2a. Note that in the present invention, the second area **100b** may or may not overlap the first area **100a** of the first electrode **104a,** as long as the second area **100b** includes at least a part of the area of LC layer that the first area **100a** does not include, so that those LC molecules not affected by the first electrode **104a** can be led by the electric field of the second electrode **104b.** The examples of the first area **100a** and the second area **100b** can be further seen in FIGs. 4a and 4b. Also note that the "boundary" of the first area **100a** and the second area **100b** may be judged by a predetermined transmission at a given time, e.g., 20 or 100 ms, after the voltage(s) is applied to the first electrode **104a** and to the second electrode **104b.** Therefore, by arranging the first electrode **104a** along with the second electrode **104b,** a higher aperture is obtained than the one resulted from the first electrode **104a** only.

Compared with the first electrode **104a,** the shape of the second electrode **104b** is less important and is less related to the backflow effect. FIG. 4a respectively shows the top view of the LC layer **100,** the first electrode **104a,** and the second electrode **104b.** While the first electrode **104a** has a star shape as in FIG. 3a, the shape of the second electrode **104b** resembles a conventional pixel electrode as a square and plain shape. From a vertical perspective, the second electrode **104** would overlap the first electrode **104a,** and the second electrode **104b** alone covers substantially all the area of the LC layer **100** to ensure a high aperture. Moreover, when incorporated into the LCD **10** of FIG. 2a, the second electrode **104b** can be simply a square of 35 µm x 35 µm. Thus, as shown in FIG. 4a, the second area **100b** includes at least a part of the area of the LC layer **100** that the first area **100a** does not include. Also that part of the area of the LC layer **100,** included by the second area **100b,** has at least two parts extending in different horizontal directions.

In another embodiment, the second electrode **104b** alone does not cover all the area of LC layer **100** in the cell, and the second electrode **104b** does not overlap the first electrode **104a** either, as shown in FIG. 4b. Instead, the second electrode **104b** has an opening corresponding to a shape of the first electrode **104a,** and the first electrode **104a** and the second electrode **104b** together cover substantially all the area of the liquid crystal layer **100** to maintain a high aperture. Also as shown in FIG. 4b, the second area **100b** still includes at least a part of the area of the LC layer **100** that the first area **100a** does not include. Moreover, when incorporated into the LCD **10** of FIG. 2a, both the first electrode **104a** and the second electrode **104b** are placed within a square 35 µm x 35 µm

Referring back to FIG. 2a, the first electrode **104a** and the second electrode **104b** are separated by a dielectric layer **104c,** e.g., a layer of SiOₓ or SiNx. When applied to the same voltage, the first electrode **104a** and the second electrode **104b** in this arrangement can provide different capacitances in cooperation with the common electrode **102,** and thus generate different switching effects.

The first electrode **104a** and the second electrode **104b** can be patterned by photolithographic and wet etching processes, and may not be limited to transmitting electrodes. Note that in FIG. 2a, the first electrode **104a** is placed above the second electrode **104b,** but in another embodiment (e.g., FIG. 4b), the first electrode **104a** can be placed underneath the second electrode **104b** (i.e., the first electrode **104a** becomes closer to the TFT), as long as the second electrode **104b** would not shield the electric field of the first electrode **104a.**

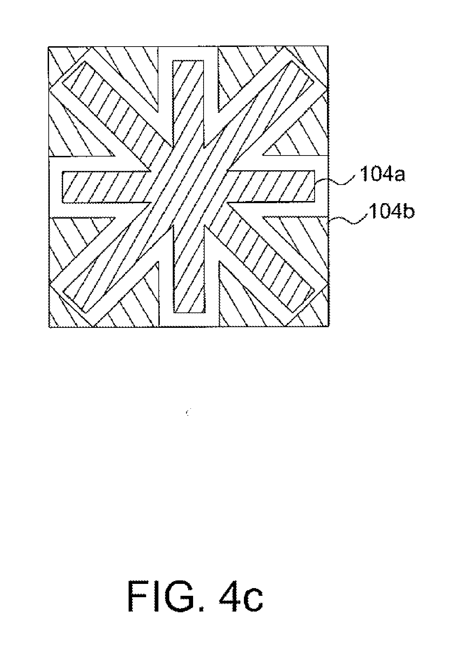

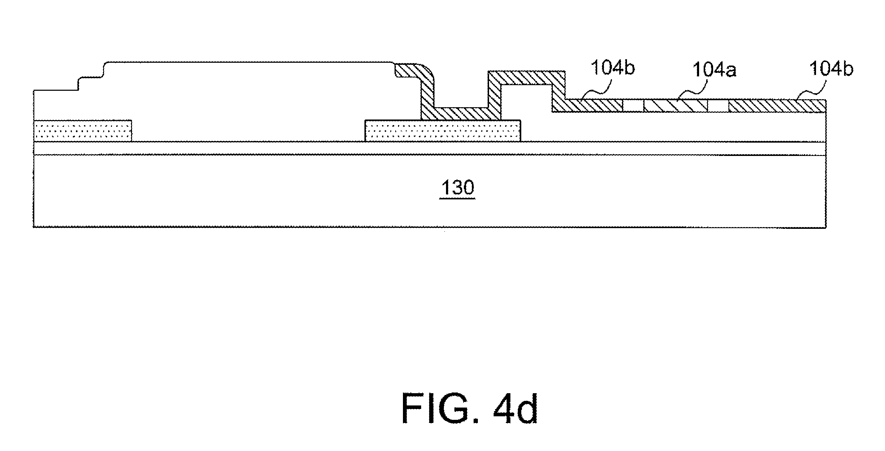

In yet another embodiment of the electrode set **104,** as shown in FIG. 4c, the first electrode **104a** and the second electrode **104b** are similar to those in FIG. 4b, but are on the same plane above the substrate **130,** as shown in FIG. 4d, while the second electrode **104b** has an opening corresponding to a shape of the first electrode **104a.** Therefore, the first electrode **104a** and the second electrode **104b** in FIG. 4c can be formed at the same time in the photolithography process. And by being independently driven, the first electrode **104a** and the second electrode **104b** on the same plane can create different switching effect from the conventional single pixel electrode, while still preserving a high aperture.

While this invention has been described with reference to the illustrative embodiments, these descriptions should not be construed in a limiting sense. Various modifications of the illustrative embodiment, as well as other embodiments of the invention, will be apparent upon reference to these descriptions. It is therefore contemplated that the appended claims will cover any such modifications or embodiments as falling within the true scope of the invention and its legal equivalents.

## Claims

1. A liquid crystal display device (LCD), comprising:
a liquid crystal layer;
a common electrode;
an electrode set for switching said liquid crystal layer, wherein said
liquid crystal layer is placed between said common electrode and said
electrode set, and said electrode set comprises:
a first electrode provided for switching a first area of said liquid crystal layer; and
a second electrode provided for switching a second area of said liquid crystal layer;
wherein said second area includes at least a part of the area of said liquid crystal layer that said first area does not include.

2. The LCD device according to claim 1, wherein said first electrode has at least two parts extending in different horizontal directions.

3. The LCD device according to claim 2, wherein said first electrode is provided for generating a fringing field to switch said first area.

4. The LCD device according to claim 2, wherein said first electrode has a star shape.

5. The LCD device according to claim 2, wherein said first electrode has a symmetrical shape.

6. The LCD device according to claim 2, wherein said second electrode has a square shape.

7. The LCD device according to claim 2, wherein said second electrode has an opening corresponding to a shape of said first electrode.

8. The LCD device according to claim 2, where said second electrode covers substantially all the area of said liquid crystal layer.

9. The LCD device according to claim 2, where said first electrode and said second electrode together cover substantially all the area of said liquid crystal layer.

10. The LCD device according to claim 2, wherein said first electrode and said second electrode are in the same plane.

11. The LCD device according to claim 2, wherein said first electrode and said second electrode are separated by a dielectric layer.

12. The LCD device according to claim 2, wherein said first electrode are a plane electrode.

13. The LCD device according to claim 1, wherein said first electrode and said second electrode are independently driven.

14. The LCD device according to claim 12, wherein said first electrode and said second electrode are driven with different voltages.

15. The LCD device according to claim 12, wherein said first electrode and said second electrode are driven with different time sequences.

16. The LCD device according to claim 1, wherein said electrode set is configured for a pixel cell of said LCD device.

17. The LCD device according to claim 1, wherein said LCD device is vertical aligned (VA).

18. The LCD device according to claim 1, wherein said part of the area of said liquid crystal layer has at least two parts extending in different horizontal directions.

19. An electronic device, comprising:
the LCD device according to claim 1;
a power supply connected to the LCD device to supply power to the LCD device.

20. The electronic device according to claim 19, wherein said electronic device is a mobile phone, a digital camera, a personal digital assistant (PDA), a notebook computer, a desktop computer, a television, a car media player, a portable video player, a GPS device, an avionics display or a digital photo frame.
